# EUROPEAN PATENT APPLICATION

(11) **EP 4 711 992 A1**
(43) Date of publication of application: **18.03.2026**
(21) Application number: 25192820.6
(22) Date of filing: 30.07.2025
(51) Int. Cl.: G06N 20/00

(54) **SYSTEMS AND METHODS FOR DETECTING AND CORRECTING DRIFT IN A DATA SET**

(30) Priority: 17.09.2024 US 202418887897
(71) Applicant: SAP SE, 69190 Walldorf (DE)
(72) Inventor: QUACH, Nai Minh, 69190 Walldorf (DE)
(74) Representative: Müller-Boré & Partner Patentanwälte PartG mbB

(57) **Abstract**

Embodiments of the present disclosure include techniques for detecting and correcting drift in a data set. Data sets may be divided into classifications. A first classifier is trained on data from multiple data sets using data from each data set having a first classification. A second classifier is trained on data from the multiple data sets using data from each data set having a second classification. The performance of the classifiers are measured. Drift is detected when the performance of either classifier is above a threshold. Some embodiments may use the trained classifiers to determine data elements from one data set that are combined with another data set for training.

## Description

### BACKGROUND

The present disclosure relates generally to training machine learning systems, and in particular, to systems and methods for detecting and correcting drift in a data set.

Data in modern computer systems flows continuously and often in a rapidly changing way. In machine learning, it is important to ensure that prediction models trained on the old data are still valid. Classical approaches consist in monitoring regularly the performance of the models. Any observed downward trend can alert users for a potential need of retraining/relearning the model with more recent data. However, this approach provides little insight to user about the nature of the data changes (which features in particular are involved) and how the model can be retrained (which data the model must forget or add in its training dataset). Accessing, visualizing, and manipulating data is typically a manual time consuming process.

### BRIEF DESCRIPTION OF THE DRAWINGS

Fig. 1 illustrates a computer system comprising classifiers for detecting drift according to an embodiment.
Fig. 2 illustrates a method of detecting drift according to an embodiment.
Fig. 3 illustrates a computer system for processing a data set to correct for drift according to another embodiment.
Fig. 4 illustrates a method of correcting data drift according to an embodiment.
Fig. 5 illustrates hardware of a special purpose computing system configured according to the above disclosure.
Fig. 6A illustrates an example initial data set.
Fig. 6B illustrates an example data drift data set.

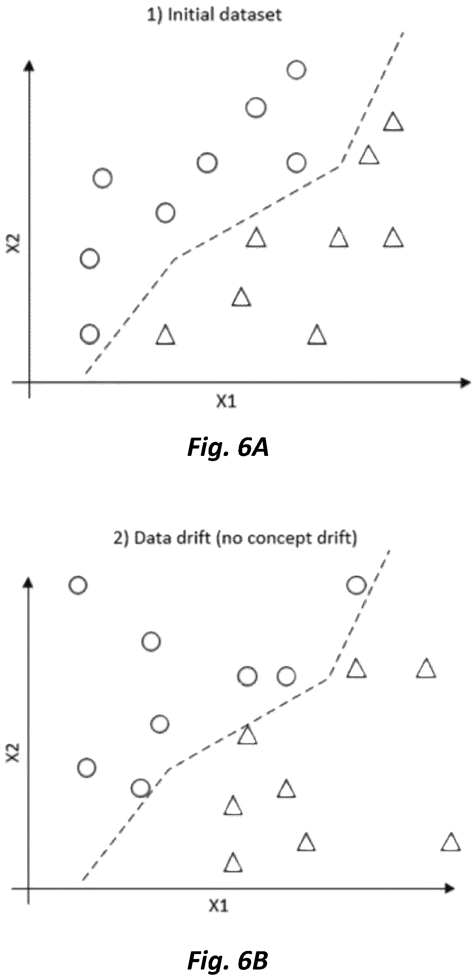

Fig. 6A illustrates an example concept drift data set.

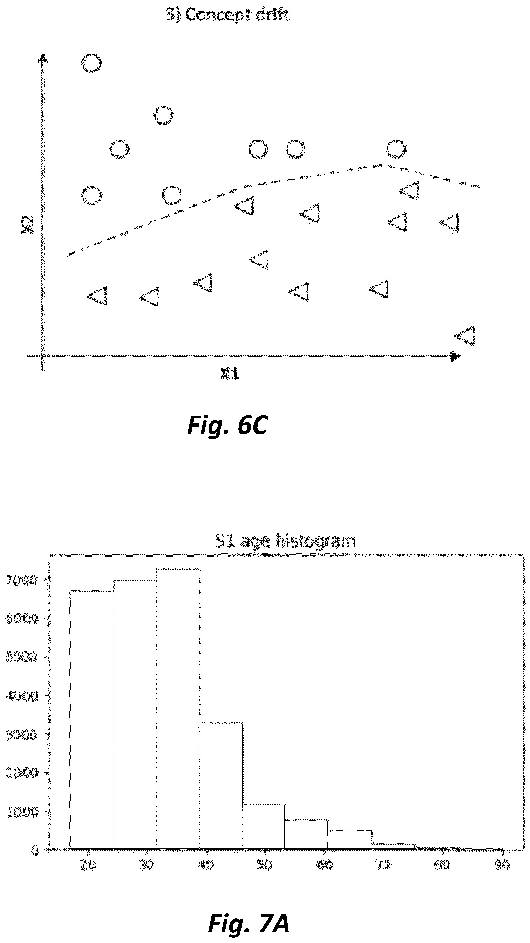

Fig. 7A illustrates an example data set.

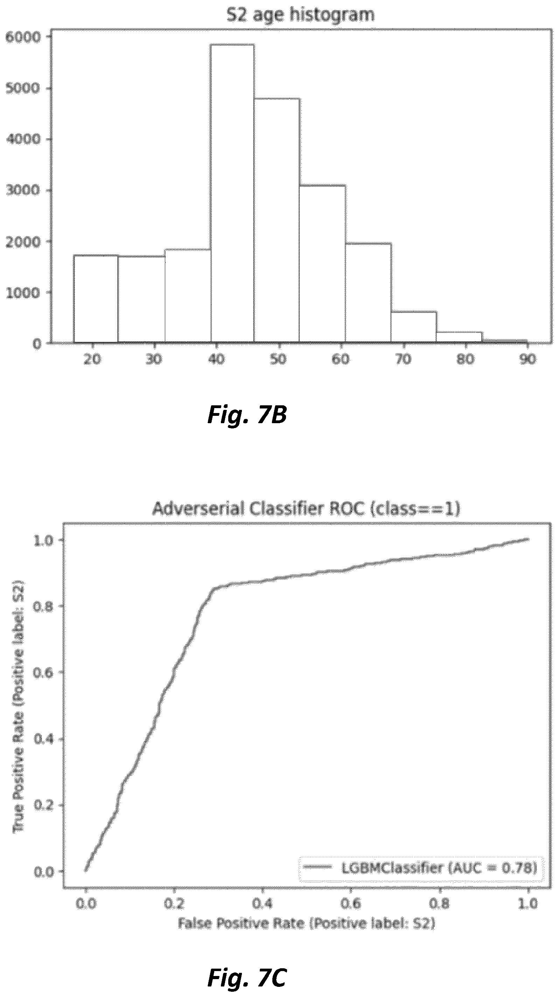

Fig. 7B illustrates another example data set.
Fig. 7C illustrates an example initial model performance.

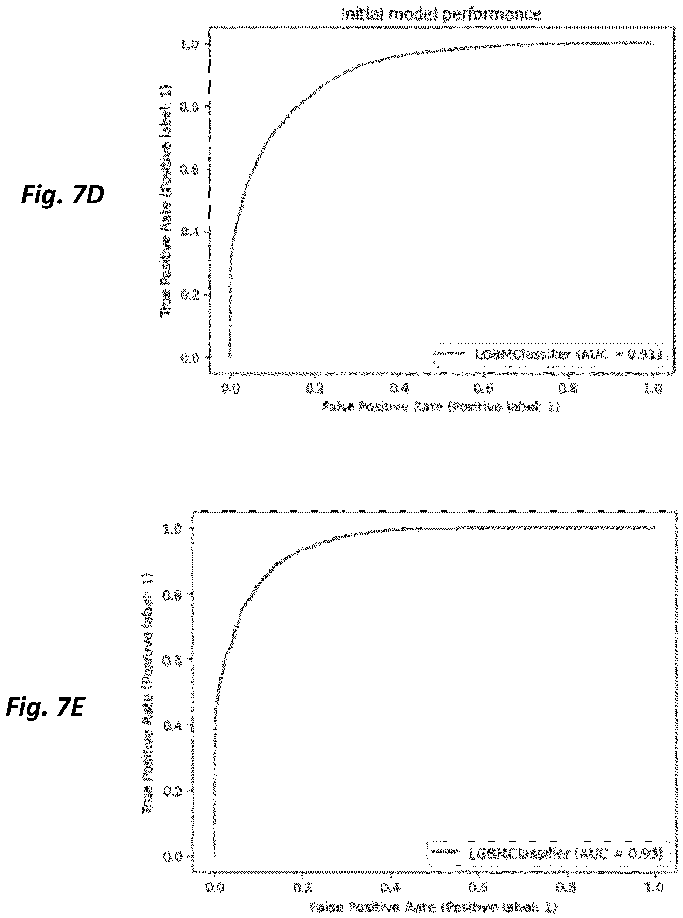

Fig. 7D illustrates another example model performance.
Fig. 7E illustrates yet another example model performance.

### DETAILED DESCRIPTION

Described herein are techniques for detecting and correcting for drift when training a machine learning model. In the following description, for purposes of explanation, numerous examples and specific details are set forth in order to provide a thorough understanding of some embodiments. Various embodiments as defined by the claims may include some or all of the features in these examples alone or in combination with other features described below and may further include modifications and equivalents of the features and concepts described herein.

Computer systems configured to perform machine learning have seen a large growth of applications and advantages. One challenge to machine learning pertains to training a machine learning model using appropriate data sets. One technical problem associated with training machine learning models pertains to drift. Training may involve a training data set and a validation data set. The validation data set is typically a portion of the training data set that is set aside to validate the performance of the machine learning model after training has been performed. Validation data sets may include around 20% of the initial training data set, for example. Data drift is a term that refers to a situation where the validation data set is significantly different from the training set. However, in some cases, the data sets used to train a machine learning model change over time. Additionally, data sets the machine learning model is trained to process (data used for inference) may change over time, and the machine learning model may need to be retrained to handle new aspects of the data. The change in data sets over time, where the relationship between the input variable and the target variable has changed, or where the patterns the model learned have become less relevant, is commonly referred to as concept drift. There are several technical challenges associated with training data addressed in the present disclosure. First, updating a model with more recent data is technically challenging because of drift. Moreover, detecting drift in data sets is a significant technical problem in machine learning applications. Additionally, retraining a machine learning model when concept drift is detected is a significant technical problem in machine learning applications. In some embodiments, the following disclosure provides a technical solution to overcome the technical problem of training a machine learning model with new data. In some embodiments, the following disclosure provides a technical solution for detecting content drift in data sets. Moreover, in some embodiments, the following disclosure further provides a technical solution for retraining a machine learning model to correct for drift.

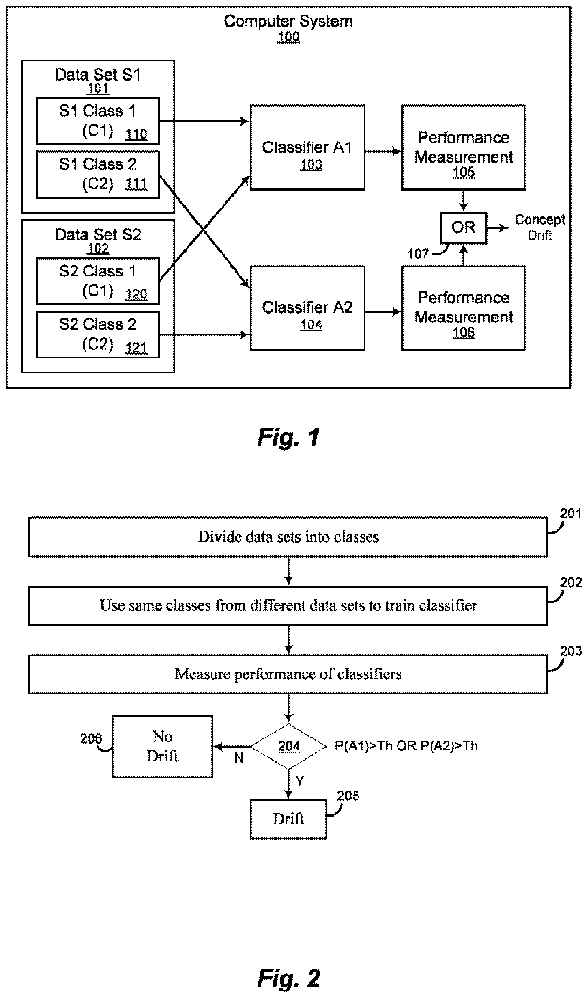

Fig. 1 illustrates a computer system 100 configured to detect drift according to an embodiment. Features and advantages of the present disclosure include detecting drift in a data set. Fig. 1 illustrates a computer system 100, which may comprise one or more computers each comprising one or more processors for executing instruction and computer readable media for storing instructions and data. The following example illustrates how drift may be detected in data sets input to a system that classifies the input data into either a first class (C1) or a second class (C2). It is to be understood that similar techniques may be applied to other machine learning systems. Computer system 100 includes a data set 101 (S1) and a data set 102 (S2), which may be provided as inputs to a classifier configured to determine if data elements of S1 and S2 are in C1 or C2. It may be desirable to determine if drift exists between S1 and S2. To achieve this, the data sets S1 and S2 are divided into subsets. S1 is divided such that data elements of S1 that fall into the first class (C1) are associated with a first group S1 Class 1 110 and data elements of S1 that fall into the second class (C2) are associated with a second group S1 Class 2 111. Similarly, S2 is divided such that data elements of S2 that fall into the first class (C1) are associated with a first group S2 Class 1 120 and data elements of S2 that fall into a second class (C2) are associated with a second group S2 Class 2 121.

Features and advantages of the present disclosure include training multiple classifiers using data elements from multiple data sets, where the data elements across data sets are associated with particular classifications. Training a classifier using data elements across multiple data sets that correspond to the same classification should produce a classifier that has very poor performance if there is no drift (e.g., because the data element from different data sets have nearly the same distributions). However, if drift occurs, then the data elements will have different distributions and the classifier resulting from the training will have better performance (e.g., detecting deviations in data elements from multiple data sets). Accordingly, data elements from S1 C1 110 and S2 C1 120 are used to train a first classifier A1 103. Similarly, data elements from S1 C2 111 and S2 C2 121 are used to train a second classifier A2 104.

Once trained, classifiers 103 and 104 may be tested and one or more performance measurement systems (e.g., here, performance measurement systems 105 and 106) may generate performance metrics for classifiers 103 and 104. One example performance metric is Area Under the Curve (AUC). AUC is the measure of the ability of a binary classifier to distinguish between classes. The higher the AUC, the better the model's performance at distinguishing between the positive and negative classes, for example. AUC represents the degree or measure of separability. It tells how much the model is capable of distinguishing between classes. The higher the AUC, the better the model is at predicting 0 classes as 0 and 1 classes as 1 (where 0 and 1 represent binary classes associated with each data element, such as images comprising "cat"/"not cat" or patient records comprising "disease"/"no disease"). Accordingly, in some embodiments, measuring the performance of A1 103 and measuring the performance of A2 104 comprises determining an area under a curve (AUC) measure of the A1 103 and A2 104. When the performance of either A1 103 or A2 104 is above a threshold (e.g., 0.5), then the system may determine that S1 and S2 comprise drift (e.g., concept drift). In this example, an output of performance measurement block 105 and an output of performance measurement block 106 are coupled to an OR block 107, and if either output is greater than a threshold, then the system may generate a signal indicating concept drift. Embodiments of the present disclosure may implement classifiers 103 and 104 and performance measurement blocks 105 and 106 and OR block 107 as hardware, software, or combinations of hardware and software.

Fig. 2 illustrates a method of detecting drift according to an embodiment. At 201, the data sets are divided into classes. For example, computer system 100 may include software to partition data elements of a first data set into a first classification and a second classification. Additionally, computer system software may partition data elements of a second data set into the first classification and the second classification. At 202, data elements associated with the same classes from different data sets are used to train multiple classifiers (e.g., binary classifiers). For example, computer system 100 may include software for training a first classifier using data elements of the first data set having the first classification and data elements of the second data set having the first classification. Likewise, computer system software may train a second classifier using data elements of the first data set having the second classification and data elements of the second data set having the second classification. At 203, the performance of the classifiers is measured. In some embodiments, performance may be measured using an AUC measure of each classifier. For example, computer system 100 may include software to measure a first performance of the first classifier and measure a second performance of the second classifier. At 204, the performance P of each classifier is compared to a threshold Th (e.g., 0.5). If either performance is greater than Th, indicating the training data sets were able to train a classifier to distinguish between multiple classes (which would not happen if there was no drift), then concept drift is detected at 205. Otherwise, if neither performance is above Th, then the system determines that there is no drift at 206.

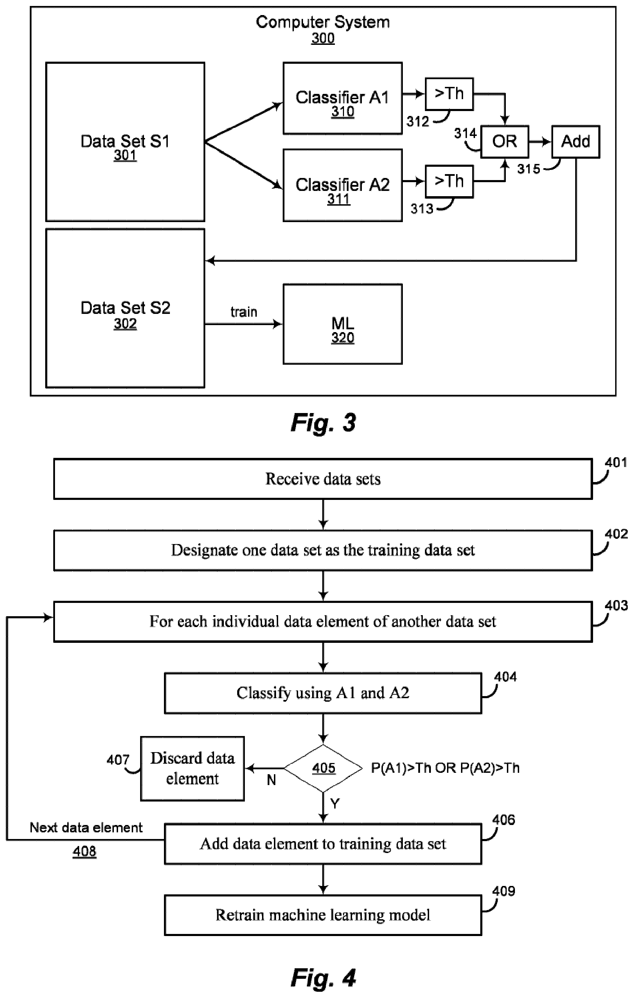

Fig. 3 illustrates a computer system for processing a data set to correct for drift according to another embodiment. In some embodiments, it may be desirable to retrain a machine learning model if drift is detected. However, retraining may be a problem if the data sets used to train the machine learning model include drift. Accordingly, to ensure the training data does not include data elements causing drift, features and advantages of the present disclose use the classifiers trained to detect drift to filter out data that causes drift. If drift is detected across data sets S1 301 and data set S2 302, one data set may be processes by classifiers A1 310 and A2 311, which may have been previously trained as described above, for example, to selectively add data elements to the other data set such that the resulting data set will not have drift.

In this example, S1 may be an older data set and S2 may be a newer data set, and it is desirable to retrain a machine learning model with newer data. However, S2 may not have sufficient volume, and it may be desirable to include elements of S1 in S2 to increase the amount of available training data without introducing drift. Advantageously, the technical problem of drift in data sets is overcome by the following algorithm executed on the data sets. When drift is detected, the data elements from the first data set S1 301 are processed in classifiers A1 301 and A2 302. For each data element from S1, a particular data element is added to the second data set S2 302 when an output of A1 310 (e.g., a predicted probability) is greater than a threshold or when an output of the A2 311 (e.g., a predicted probability) is greater than a threshold. In this example, each data element is processed by A1 310 and A2 311. The output of A1 310 is input to a threshold detector 312, which determines if the output is greater than threshold Th. Similarly, output of A1 310 is input to a threshold detector 312, which determines if the output is greater than threshold Th. The thresholds used in detectors 312 and 313 may be the same, such as 0.25, for example. Classifier A1 310 outputs a predicted probability that the data element is a member of S2 in class 1 and classifier A2 311 outputs a predicted probability that the data element is a member of S2 in class 2. Note, that if drift exists, then classifier A1 classifies certain data elements of S1 class 1 differently than certain data elements of S2 class 1. Similarly, if drift exists, then classifier A2 classifies certain data elements of S1 class 2 differently than certain data elements of S2 class 2. The threshold is selected such that the predicted probability that the particular data element is a member of either S2 C1 or S2 C2 is greater than the threshold, thereby removing data elements of S1 that are more likely causing the drift (e.g., outside to distribution of S2).

Once a sufficient number of data elements from S1 have been added to S2, data set S2 may be used to train (or retrain) machine learning (ML) model 320.

Fig. 4 illustrates a method of correcting data drift according to an embodiment. A computer system may include software for performing the present algorithm. At 401, the software receives the data sets. At 402, one data set is designated as the training data set. At 403, each individual data element of the other data set is selected for processing. At 404, the data element is classified using classifiers A1 and A2, which were trained on a partitioned data sets comprising drift as described above. At 405, the outputs of each classifier A1 and A2 are compared to thresholds. If neither output is greater than the threshold, then the data element is discarded at 407. However, if either output is greater than the threshold, then the data element is added to the training data set at 406, and the next data element is processed at 408. Once a sufficient number of data elements are added to the training data set, a machine model is trained (or retrained) at 409.

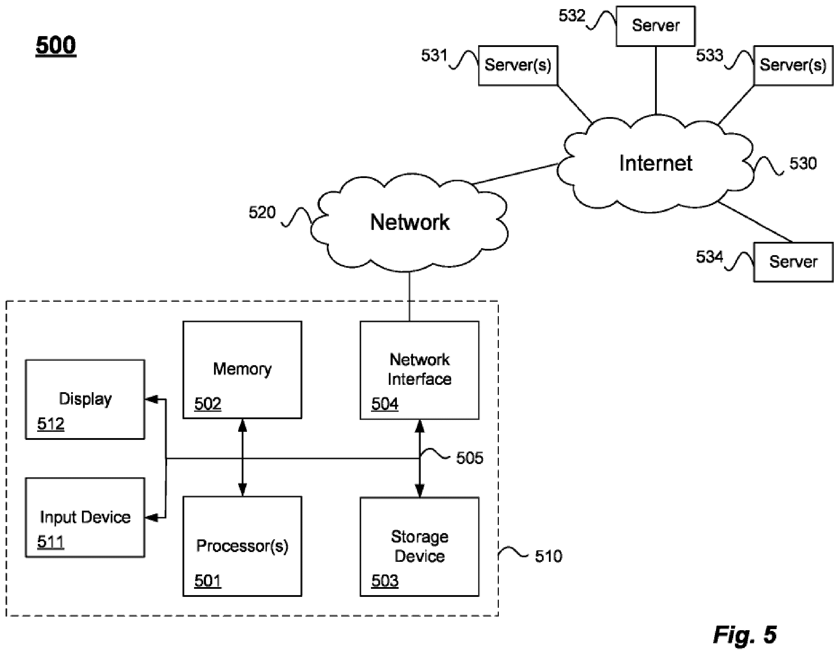

Fig. 5 illustrates hardware of a special purpose computing system 500 configured according to the above disclosure. The following hardware description is merely one example. It is to be understood that a variety of computers topologies may be used to implement the above-described techniques. An example computer system 510 is illustrated in Fig. 5. Computer system 510 includes a bus 505 or other communication mechanism for communicating information, and one or more processor(s) 501 coupled with bus 505 for processing information. Computer system 510 also includes memory 502 coupled to bus 505 for storing information and instructions to be executed by processor 501, including information and instructions for performing some of the techniques described above, for example. Memory 502 may also be used for storing programs executed by processor(s) 501. Possible implementations of memory 502 may be, but are not limited to, random access memory (RAM), read only memory (ROM), or both. A storage device 503 is also provided for storing information and instructions. Common forms of storage devices include, for example, a hard drive, a magnetic disk, an optical disk, a CD-ROM, a DVD, solid state disk, a flash or other non-volatile memory, a USB memory card, or any other electronic storage medium from which a computer can read. Storage device 503 may include source code, binary code, or software files for performing the techniques above, for example. Storage device 503 and memory 502 are both examples of non-transitory computer readable storage mediums (aka, storage media).

In some systems, computer system 510 may be coupled via bus 505 to a display 512 for displaying information to a computer user. An input device 511 such as a keyboard, touchscreen, and/or mouse is coupled to bus 505 for communicating information and command selections from the user to processor 501. The combination of these components allows the user to communicate with the system. In some systems, bus 505 represents multiple specialized buses for coupling various components of the computer together, for example.

Computer system 510 also includes a network interface 504 coupled with bus 505. Network interface 504 may provide two-way data communication between computer system 510 and a local network 520. Network 520 may represent one or multiple networking technologies, such as Ethernet, local wireless networks (e.g., WiFi), or cellular networks, for example. The network interface 504 may be a wireless or wired connection, for example. Computer system 510 can send and receive information through the network interface 504 across a wired or wireless local area network, an Intranet, or a cellular network to the Internet 530, for example. In some embodiments, a frontend (e.g., a browser), for example, may access data and features on backend software systems that may reside on multiple different hardware servers on-prem 531 or across the network 530 (e.g., an Extranet or the Internet) on servers 532-534. One or more of servers 532-534 may also reside in a cloud computing environment, for example.

Figs. 6A-C illustrate the difference between data drift and concept drift. Data drift, also known as distributional drift or dataset shift, refers to changes in the statistical properties or distribution of the input data. It occurs when the distribution of the data used for training a machine learning model differs from the distribution of the data encountered during deployment or testing. Data drift can be caused by various factors, such as changes in data collection processes, shifts in user behavior, or environmental changes. Data drift affects the input features, but the relationship between the features and the target variable remains the same.

Concept drift, also known as model drift or virtual drift, refers to changes in the relationship between the input variables and the target variable. It occurs when the underlying concept or concept of interest changes over time. Concept drift can happen due to evolving user preferences, changes in the environment, or other factors that alter the relevance or meaning of certain features in relation to the target variable. Unlike data drift, concept drift affects the relationship between features and the target variable, potentially leading to degradation in model performance.

Referring to Figs. 6A-C, there are 2 input variables X1 and X2. The circles and the triangle markers represent respectively the binary labels (0 and 1) of the data in the data sets. Fig. 6A illustrates an initial state. Fig. 6B illustrates data drift. Fig. 6C illustrates concept drift.

Figs. 7A-E illustrate an example according to an embodiment. The example is based on the adult dataset (also named as "Census Income"). The classification task is to determine whether the annual income exceeds $50,000 based on demographic characteristics. We artificially create two subsets: S1: contains in majority people of age younger than 40. It is considered as the "old" data that was initially used for the classifier model. S2: contains in majority people of age older than 40. It is considered as a "recent" data that has evolved in time. The age histograms are shown in Figs. 7A-B.

The technical challenge is to first to determine whether there is potentially a "concept drift", whether the relationship between the demographic features and the annual income has changed. If the answer is yes, we can proceed to retrain the model by composing a new dataset in which we incorporate the new dataset S2 and partially S1 by removing data elements considered as obsolete based on the classifiers. First, 2 classifiers are trained based on the class 1 as described above. In some embodiments the classifiers are LightGBM (LGBM) classifiers, where is a a gradient boosting method, which constructs a strong learner by sequentially adding weak learners in a gradient descent manner known to those skilled in the art. Accordingly, the classifiers may have a relatively significant AUC of (0.78) as illustrated in Fig. 7C. The model may be retrained with a new data set. The latter is composed of S2 plus a subset of S1 which row are predicted with a high probability being in S2 (for instance, probability > 0.8). The new model is naturally improved in performance since it is trained with more recent data. In the example, the AUC is passed from 0.91 to 0.95 as illustrated in Figs. 7D-E.

### FURTHER EXAMPLES

Each of the following non-limiting features in the following examples may stand on its own or may be combined in various permutations or combinations with one or more of the other features in the examples below. In various embodiments, the present disclosure may be implemented as a system, method, or computer readable medium.

Embodiments of the present disclosure may include systems, methods, or computer readable media. In one embodiment, the present disclosure includes computer system comprising: at least one processor and at least one non-transitory computer readable medium (e.g., memory) storing computer executable instructions that, when executed by the at least one processor, cause the computer system to perform methods as described herein and in the following examples. In another embodiment, the present disclosure includes a non-transitory computer-readable medium storing computer-executable instructions that, when executed by at least one processor, perform the methods as described herein and in the following examples.

In one embodiment, the present disclosure includes a method comprising: partitioning, on a computer system, data elements of a first data set into a first classification and a second classification; partitioning, on the computer system, data elements of a second data set into the first classification and the second classification; training, on the computer system, a first classifier using data elements of the first data set having the first classification and data elements of the second data set having the first classification; training, on the computer system, a second classifier using data elements of the first data set having the second classification and data elements of the second data set having the second classification; measuring, on the computer system, a first performance of the first classifier; measuring, on the computer system, a second performance of the second classifier; and determining, on the computer system, that the first data set and second data set comprise drift when one of the first performance or the second performance is above a first threshold.

In one embodiment, the drift is concept drift.

In one embodiment, the first classifier and second classifier are binary classifiers.

In one embodiment, measuring the first performance and measuring the second performance comprise determining an area under a curve (AUC) measure of the first classifier and second classifier.

5 In one embodiment, the first threshold is 0.5.

In one embodiment, when the first data set and second data set comprise drift, the method further comprising: processing the data elements from the first data set in the first classifier and the second classifier; and for each particular data element from the first data set, adding the particular data element to the second data set when an output of the first classifier is greater than a second threshold or when an output of the second classifier is greater than a third threshold; and retraining a machine learning model using the second data set.

In one embodiment, the second threshold and the third threshold are the same value.

In one embodiment, the second threshold and the third threshold are at least 0.25.

The above description illustrates various embodiments along with examples of how aspects of some embodiments may be implemented. The above examples and embodiments should not be deemed to be the only embodiments, and are presented to illustrate the flexibility and advantages of some embodiments as defined by the following claims. Based on the above disclosure and the following claims, other arrangements, embodiments, implementations, and equivalents may be employed without departing from the scope hereof as defined by the claims.

## Claims

1. A method comprising:
partitioning, on a computer system, data elements of a first data set into a first classification and a second classification;
partitioning, on the computer system, data elements of a second data set into the first classification and the second classification;
training, on the computer system, a first classifier using data elements of the first data set having the first classification and data elements of the second data set having the first classification;
training, on the computer system, a second classifier using data elements of the first data set having the second classification and data elements of the second data set having the second classification;
measuring, on the computer system, a first performance of the first classifier;
measuring, on the computer system, a second performance of the second classifier; and
determining, on the computer system, that the first data set and second data set comprise drift when one of the first performance or the second performance is above a first threshold.

2. The method of claim 1, wherein the drift is concept drift.

3. The method of claim 1 or 2, wherein the first classifier and second classifier are binary classifiers.

4. The method of any one of the preceding claims, wherein measuring the first performance and measuring the second performance comprise determining an area under a curve (AUC) measure of the first classifier and second classifier.

5. The method of any one of the preceding claims, wherein the first threshold is 0.5.

6. The method of any one of the preceding claims, wherein when the first data set and second data set comprise drift, the method further comprising:
processing the data elements from the first data set in the first classifier and the second classifier; and
for each particular data element from the first data set, adding the particular data element to the second data set when an output of the first classifier is greater than a second threshold or when an output of the second classifier is greater than a third threshold; and
retraining a machine learning model using the second data set.

7. The method of claim 6, wherein the second threshold and the third threshold are the same value.

8. The method of claim 6 or 7, wherein the second threshold and the third threshold are at least 0.25.

9. The method of any one of the preceding claims, wherein the data set further comprises user interface code to train the machine learning model.

10. A computer system comprising:
at least one processor;
at least one non-transitory computer-readable medium storing computer-executable instructions that, when executed by the at least one processor, cause the computer system to perform a method according to any one of claims 1 to 9.

11. A non-transitory computer-readable medium storing computer-executable instructions that, when executed by at least one processor of a computer system, perform a method according to any one of claims 1 to 9.
